# EUROPEAN PATENT APPLICATION

(11) **EP 1 010 574 A2**
(43) Date of publication of application: **21.06.2000**
(21) Application number: 99125110.9
(22) Date of filing: 16.12.1999
(51) Int. Cl.: B60N 3/00

(54) **Table structure**

(30) Priority: 18.12.1998 JP 36147698; 18.12.1998 JP 36147898
(71) Applicant: Ikeda Bussan Co., Ltd., Ayase-shi, Kanagawa 252-1121 (JP)
(72) Inventor: Hoshino, Akihiko, c/o Ikeda Bussan Co., Ltd., Ayase-shi, Kanagawa 252-1121 (JP)
(74) Representative: Grünecker, Kinkeldey, Stockmair & Schwanhäusser Anwaltssozietät

(57) **Abstract**

In a seat having a table structure on the rear face of the seat back, a table swingable between a folded state and an unfolded state has a through hole for holding a cup in the unfolded state. The table structure includes a hook member used for suspending a bag or the like. The hook member is mounted on the back side of the table, or the rear face of the seat back, at such a position near the through hole that the hook member can be used through the through hole in the folded state.

## Description

### BACKGROUND OF THE INVENTION

### 1. FIELD OF THE INVENTION

The present invention relates to a structure of a table for a seat back. In particular, the present invention relates to a table structure having a table swingably supported by a pair of hinge brackets which are disposed on a rear face of the seat back. The table is swingable between a folded state in which the table extends along the rear face of the seat back and an unfolded state in which the table projects substantially horizontally from the rear face of the seat back.

### 2. DESCRIPTION OF THE RELATED ART

Generally, a table is provided on a rear face of a seat back of a vehicular front seat. In this case, the table is used in such a manner that the table is either folded in the seat back or kept substantially horizontal, for securing occupant's comfort in the vehicle.

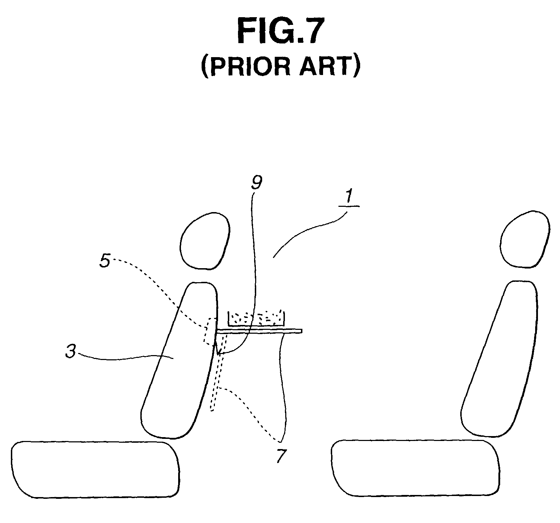

As is seen in Fig. 7, there is provided a table structure 1 having a table 7 which is swingably supported by a pair of hinge brackets 5, according to the prior art. The hinge brackets 5 are disposed on a rear face of the seat back 3. The table 7 is so shaped that the table 7 can be snugly fitted along the rear face of the seat back 3 when the table 7 is folded therein. The seat back 3 further has on the rear face thereof a hook member 9. The hook member 9 is used for hooking articles. When the table 7 is folded in the seat back 3, a latch or the like is used to latch the table 7 with the rear face of the scat back 3. In this case, however, the hook member 9 on the rear face of the seat back 3 is covered with the table 7, therefore, it cannot be used by the rear scat occupant. For the seat occupant to use the hook member 9, it is necessary to keep the table 7 substantially horizontal. Moreover, the table 7 does not afford to support thereon many articles. In this ease, some of the articles are put on the floor instead of on the table 7.

### SUMMARY OF THE INVENTION

It is, therefore, an object of the present invention to provide a table structure of a seat back having a hook member disposed on a back face of the table or on a rear face of the seat back, which hook member can be used in table's folded state. It is another object of the present invention to have the hook member afford to hook as many articles as cannot be entirely put on the table. It is still another object of the present invention to develop the table structure which is simple in construction, less time-consuming to assemble, good in durability and appearance, and effective for securing rear seat occupant's comfort.

There is provided a table structure according to the present invention. This table structure comprises; (a) a table swingable between a folded state in which the table extends along a rear face of a seat back, and an unfolded state in which the table projects from the rear face of the seat back, the table having a first table surface facing upward in the unfolded state, a second table surface facing downward in the unfolded state, and a hole extending from a first open end opening in the first table surface to a second open end opening in the second table surface; (b) a hinge bracket for supporting the table on the rear face of the seat back swingably between the folded and unfolded states; and (c) a hook member disposed between the rear face of the seat back and the hole of the table when the table is in the folded state.

### BRIEF DESCRIPTION OF THE DRAWINGS

Fig. 1 is a front perspective view of a table of a table structure for a seat back, according to preferred embodiments of the present invention;
Fig. 2 is a rear perspective view of the table of the table structure for the seat back, according to the preferred embodiments of the present invention;
Fig. 3 is a bottom plan view of the table of the table structure for the seat back, according to the preferred embodiments of the present invention;
Fig. 4 is a side view illustrative of folded and unfolded states of the table of the table structure for the seat back, according to the preferred embodiments of the present invention;
Fig. 5 is a front view of the table of the table structure for the seat back in the folded state, according to the first preferred embodiment of the present invention;
Fig. 6 is a front view of the table of the table structure for the seat back in the folded state, according to the second preferred embodiment of the present invention; and
Fig. 7 is a side view of a table structure for a seat back, according to a prior art.

### DESCRIPTION OF THE PREFERRED EMBODIMENT

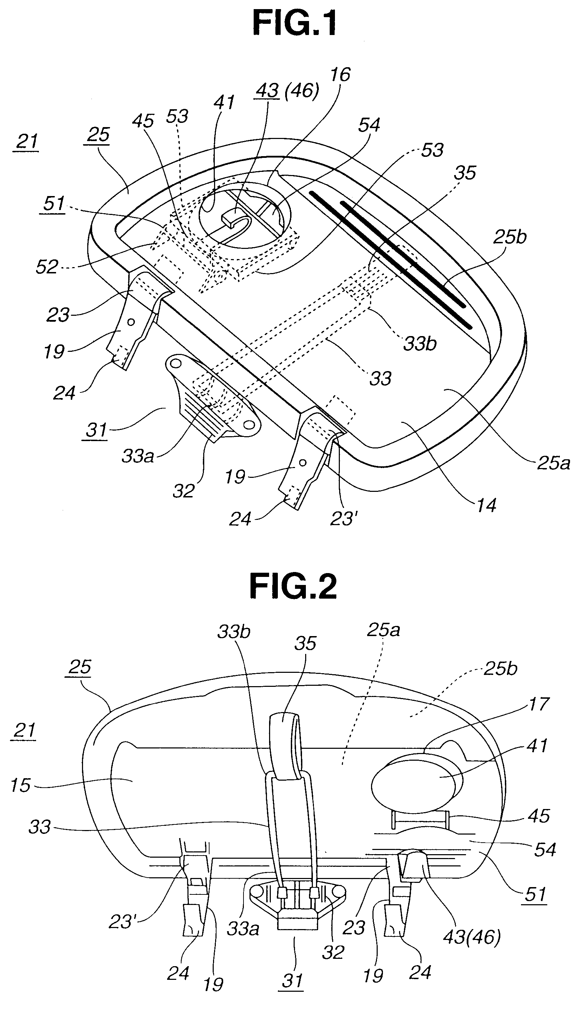

As is seen in Figs. 1-6, there are provided table structures 21 according to preferred embodiments of the present invention. The table structures 21 shown in Figs. 1-6 are for vehicular seat backs. Notwithstanding, the table structures 21 according to the present invention are applicable, without limitation, to various kinds of seat backs.

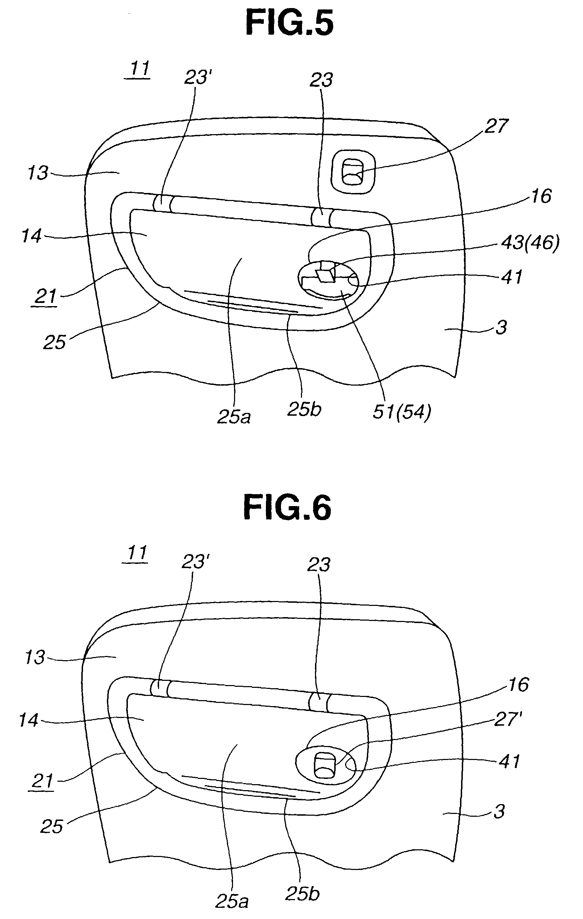

According to the present invention, the table structure shown in Fig. 5 is representative of a first preferred embodiment, while the one shown in Fig. 6 is representative of a second preferred embodiment.

Fig. 5 shows a rear face 3 of a seat back 13 for a vehicular seat 11 for a front seat occupant. A table structure 21 has a table 25 which is supported by a pair of right and left hinge brackets 23 and 23' disposed on the rear face 3 of the seat back 13. The table 25 is mounted on the rear face 3 of the seat back 13 so that the table 25 is swingable between a folded state in which the table 25 extends downward from a table swing axis along the rear face 3 of the seat back 13, and an unfolded state in which the table 5 projects rearward from the rear face 3 of the seat back 13.

Fig. 5 further shows a hook member 27 at an upper portion on the rear face 3 of the seat back 13. The table 25 is made of synthetic resin such as vinyl chloride, or light metal. The table 25 has on a first table surface 14 thereof a major portion 25a, which surface faces upward in the unfolded state of the table 25. The major portion 25a has a cross section which is concave in shape. In the vicinity of the major portion 25a, there is provided a pen tray 25b having a cross section which is also concave in shape and not flush with the major portion 25a.

As is seen in Figs. 1-2, each of the right and left hinge brackets 23 and 23' of this embodiment has, in this example, a hook portion 24 for hooking articles. Each of the right and left hinge brackets 23 and 23' further has a base member 19 fixed to the seat back 13. The base member 19 extends from the table swing axis down to a lower end which is formed with the hook portion 24.

As is seen in Figs. 1-4, an engaging member 31 is disposed between the right and left hinge brackets 23 and 23' of the table 25. The engaging member 31 engages the table 25, and keeps the table 25 substantially horizontal in the unfolded state of the table 25. The engaging member 31 has a center cam 32 which is secured to the rear face 3 of the seat back 13. The engaging member 31 further has a wire spring 33 which is engaged with the center cam 32 and is U-like in shape. The wire spring 33 has a foot end 33a which is engaged with the center cam 32. The wire spring 33 further has a head end 33b which is engaged with an engaging portion 35. The engaging portion 35 is disposed in a substantially middle and rearward portion of a second table surface 15, which surface faces downward in the unfolded state of the table 25. The engaging member 31 may be replaced with a shock-absorber or the like.

The table 25 has a hole 41 extending from a first open end 16 opening in the first table surface 14 to a second open end opening in the second table surface 15. The hole 41 is used for receiving a cup or the like. The table 25 further has a hook member 43 mounted on the second table surface 15 in the vicinity of the second open end 17 of the hole 41 in such a manner as to permit using the hook member 43 through the hole 41 in the folded state of the table 25.

The hook member 43 has a hook 46 which is exposed and visually checked with the rear seat occupant's eyes through the hole 41 of the table 5 in the folded state of the table 25. The hook member 43 further has a support member 45 fixed to the second table surface 15 for pivotably supporting the hook 46. The hook 46 is arranged in the same straight line with either one of the right hinge bracket 23 or left hinge bracket 23' in a direction substantially perpendicular to the table swing axis.

The hook 46 is urged by a spring (not shown) toward a second position at which the hook 46 is visible through the hole 41. By dint of the spring (not shown), the hook 46 can be prevented from moving toward a first position - at which the hook 46 is not visible through the hole 41 and is in the vicinity of the right hinge bracket 23 or left hinge bracket 23' - when the table 25 is in the folded state.

In the unfolded state of the table 25, in addition to the hook 46 the following two can be used. One is the hook portion 24 disposed at the right and left hinge brackets 23 and 23', and the other is the hook member 27 disposed at the upper portion on the rear face 3 of the seat back 13.

Not limited to the upper portion, the hook member 27 can be disposed at different portions. As is seen in Fig. 6, a hook member 27' which is a counterpart of hook member 27 in Fig. 5 is disposed at a different portion from that of the hook member 27. It may be necessary, however, the hook member 27' can be used through the hole 41 in the folded state of the table 25.

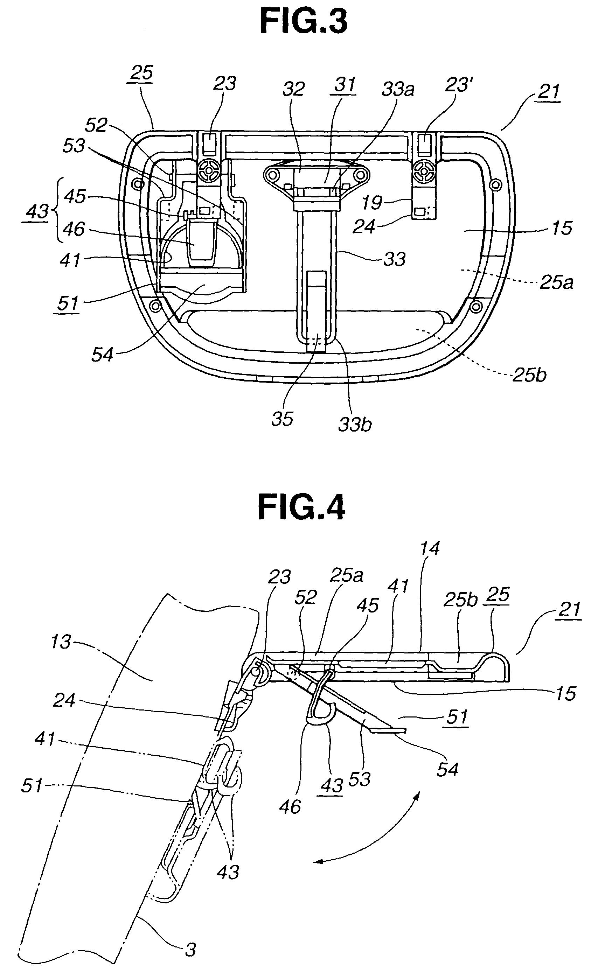

When the table 25 is in the unfolded state, the cup is stopped and held by a holder 51 which is disposed below the second open end 17 of the hole 41. The holder 51 has a support member 52, a pair of arms 53 and a receptacle 54. The pair of arms 53 are swingable on the support member 52. The receptacle 54 is disposed between two ends of the pair of arms 53. Fig. 3 shows a construction in which the holder 51 surrounds the hook member 43. To the contrary, another construction is allowed in which the hook member 43 surrounds the holder 51.

As shown in Fig. 4 with imaginary lines, the hook 46 of the hook member 43 projects into the hole 41 at the second position at which the hook 46 is visible through the hole 41. In the folded state of the table 25, the hook 46 may be free from projecting into the hole 41, provided that the hook 46 can be exposed and used through the hole 41.

## Claims

1. A table structure comprising:
(a) a table swingable between a folded state in which the table extends along a rear face of a seat back, and an unfolded state in which the table projects from the rear face of the seat back, the table having a first table surface facing upward in the unfolded state, a second table surface facing downward in the unfolded state, and a hole extending from a first open end opening in the first table surface to a second open end opening in the second table surface;
(b) a hinge bracket for supporting the table on the rear face of the seat back swingably between the folded and unfolded states; and
(c) a hook member mounted on the second table surface in the vicinity of the second open end of the hole in such a manner as to permit using the hook member through the hole in the folded state.

2. A table structure as recited in Claim 1, wherein the hook member comprises a hook exposed through the hole of the table in the folded state.

3. A table structure as recited in Claim 2, wherein the hook of the hook member is swingable from a first position to a second position at which the hook is visible through the hole.

4. A table structure as recited in Claim 3, wherein the hook member further comprises a support member fixed to the second table surface, for pivotally supporting the hook.

5. A table structure as recited in Claim 4, wherein the hole is so shaped as to receive and hold a cup.

6. A table structure as recited in Claim 5, wherein the table comprises a holder for stopping and holding the cup in the unfolded state, said holder being disposed below the second open end opening in the second table surface.

7. A table structure as recited in Claim 6, wherein the hinge bracket supports the table so that the table is swingable on a table swing axis, and the support member supports the hook so that the hook is swingable on a hook swing axis extending substantially in parallel to the table swing axis, between the table swing axis and the hole.

8. A table structure as recited in Claim 7, wherein the hook of the hook member is swingable in an imaginary plane bisecting the hole into left and right semicircular halves.

9. A table structure as recited in Claim 6, wherein the hook projects into the hole at the second position.

10. A table structure as recited in Claim 1, wherein the hinge bracket comprises a hook portion.

11. A table structure as recited in Claim 10, wherein the hinge bracket further comprises a base member fixed to the rear face of the seat back, the base member extending from a table swing axis downward to a lower end which is formed with the hook portion.

12. A table structure as recited in Claim 11, wherein the hinge bracket is a first hinge bracket, the table structure further comprises a second hinge bracket, and each of the hinge brackets comprises the base member formed with the hook portion at the lower end.

13. A seat comprising:
(a) a seat back having a front face and a rear face;
(b) a table mounted on the rear face of the seat back so that the table is swingable on a table swing axis between a folded state in which the table extends downward from the table swing axis along the rear face of the seat back, and an unfolded state in which the table projects rearward from the rear face of the seat back, the table having a first table surface facing upward in the unfolded state, a second table surface facing downward in the unfolded state and a hole for holding a cup;
(c) first and second hinge brackets for supporting the table on the rear face of the seat back swingably between the folded and unfolded states; and
(d) a hook member disposed between the rear face of the seat back and the hole of the table when the table is in the folded state.

14. A seat as recited in Claim 13, wherein the hook member is mounted on the second table surface.

15. A seat as recited in Claim 13, wherein the hook member is mounted on the rear face of seat back.
